# EUROPEAN PATENT APPLICATION

(11) **EP 2 706 603 A1**
(43) Date of publication of application: **12.03.2014**
(21) Application number: 12781981.1
(22) Date of filing: 26.04.2012
(51) Int. Cl.: H01M 8/06, H01M 8/00, H01M 8/04, H01M 8/10

(54) **FUEL CELL SYSTEM AND METHOD FOR OPERATING SAME**

(30) Priority: 06.05.2011 JP 2011103479
(71) Applicant: Panasonic Corporation, Kadoma-shi, Osaka 571-8501 (JP)
(72) Inventor: INOUE, Atsutaka, Osaka 540-6207 (JP); TATSUI, Hiroshi, Osaka 540-6207 (JP); MORITA, Junji, OSAKA 540-6207 (JP); YUKIMASA, Akinori, Osaka 540-6207 (JP); WAKAMATSU, Hidetoshi, Osaka 540 -6207 (JP)
(74) Representative: Grünecker, Kinkeldey, Stockmair & Schwanhäusser
(86) International application number: PCT/JP2012/002886
(87) International publication number: WO 2012/153484

(57) **Abstract**

A fuel cell system according to the present invention includes: a fuel cell apparatus; a heating medium circulation passage (9) through which a heating medium circulates, the heating medium exchanging heat with off gas; a first heat exchanger provided on the heating medium circulation passage (9) and configured to produce condensation water; a cooling mechanism provided on the heating medium circulation passage (9) and configured to cool down the heating medium before the heating medium is supplied to the first heat exchanger; a first temperature detector (28) configured to detect a temperature of the heating medium after the heating medium is cooled down by the cooling mechanism and before the heating medium is supplied to the first heat exchanger; and a controller (101) configured to control the cooling mechanism such that the temperature detected by the first temperature detector (28) becomes a first temperature which is set to such a temperature as to allow necessary condensation water for a reforming reaction to be produced by the first heat exchanger.

## Description

### Technical Field

The present invention relates to a fuel cell system configured to supply heat and electricity, and to a method of operating the same.

### Background Art

A co-generation system is a system configured to generate and supply electric power to a consumer, thereby offsetting the consumer's electricity load, and to recover and store exhaust heat that is generated when generating the electric power, thereby offsetting the consumer's hot water load.

As one of such co-generation systems, there is a known co-generation system in which a fuel cell and a water heater are operated by using the same fuel (see Patent Literature 1, for example). Patent Literature 1 discloses a co-generation system which includes: a fuel cell; a heat exchanger configured to recover heat that is generated when the fuel cell operates; a hot water tank configured to store water that has been heated by circulating through the heat exchanger; and a water heater having a function of heating the water that flows out of the hot water tank to a predetermined temperature. The fuel cell and the water heater are configured to operate by using the same fuel.

There is also a known direct water injection fuel cell system, which is capable of high water recovery performance and preventing a shortage of water for direct injection even under a high-temperature environment (see Patent Literature 2, for example). Patent Literature 2 discloses a fuel cell system configured such that a second water feeder injects, in a spraying manner, water in liquid form toward supply air that is closer to an air inlet than a downstream-side heat exchanger on an air supply passage, that is, toward supply air that has not yet flowed into the downstream-side heat exchanger.

### Citation List

### Patent Literature

PTL 1: Japanese Laid-Open Patent Application Publication No. 2007-248009
PTL 2: Japanese Laid-Open Patent Application Publication No. 2009-238391

### Summary of Invention

### Technical Problem

When the co-generation system disclosed in Patent Literature 1 is referred to in combination with the fuel cell system disclosed in Patent Literature 2, a configuration as described below is conceivable. Specifically, the conceivable configuration includes: a fuel cell; an upstream-side heat exchanger configured to recover heat from the fuel cell; a downstream-side heat exchanger provided downstream from the upstream-side heat exchanger; a liquid water spray injection device realized by a second water feeder and configured to inject water in liquid form in a spraying manner toward supply air that has not yet flowed into the downstream-side heat exchanger; and a hot water tank configured to store water that has been heated by circulating through the heat exchangers.

The above configuration is effective as a means for improving water recovery performance under a high-temperature environment or in a case where the temperature of the water stored in the hot water tank is high. However, if the above configuration is applied to a conventional fuel cell system, then additional installation of the following devices is necessary: the downstream-side heat exchanger; an air feeder configured to feed supply air that is to be flowed into the downstream-side heat exchanger; the second water feeder; and the liquid water spray injection device. Thus, there are problems in that the configuration of the fuel cell system cannot be simplified and power consumption by the fuel cell system increases due to the additional installation of various devices.

Moreover, large space is necessary in order to allow the second water feeder to inject water in liquid form in a spraying manner, and thus there is a problem that the fuel cell system becomes large-sized.

An object of the present invention is to provide a power generation system which is capable of operating efficiently and realizes a simplified configuration and power saving of the system when improved water recovery performance is required as mentioned above.

### Solution to Problem

In order to solve the above conventional problems, a fuel cell system according to the present invention includes: a fuel cell configured to generate electricity by using a fuel gas and an oxidizing gas, the fuel gas being generated through a reforming reaction between a raw material gas and condensation water; a heating medium circulation passage through which a heating medium circulates, the heating medium exchanging heat with at least one of off gases, the off gases being an off fuel gas which is the fuel gas discharged from the fuel cell and an off oxidizing gas which is the oxidizing gas discharged from the fuel cell; a first heat exchanger provided on the heating medium circulation passage and configured to produce the condensation water that is to be supplied to the fuel cell, the first heat exchanger producing the condensation water by condensing steam in the at least one off gas by performing heat exchange between the at least one off gas and the heating medium; a cooling mechanism provided on the heating medium circulation passage and configured to cool down the heating medium before the heating medium is supplied to the first heat exchanger; a first temperature detector configured to detect a temperature of the heating medium after the heating medium is cooled down by the cooling mechanism and before the heating medium is supplied to the first heat exchanger; and a controller configured to control the cooling mechanism such that the temperature detected by the first temperature detector becomes a first temperature which is set to such a temperature as to allow necessary condensation water for the reforming reaction to be produced by the first heat exchanger.

According to the above configuration, the heating medium is caused to exchange heat with at least one of external air and the raw material gas, so that the heating medium is cooled down, and thereby water recovery performance in recovering water from the off gas can be improved. As a result, the fuel cell system can be operated efficiently.

### Advantageous Effects of Invention

The fuel cell system according to the present invention realizes improved water recovery performance in recovering water from the off gas and is capable of operating efficiently. According to the present invention, as compared to conventional fuel cell systems, the configuration of the fuel cell system can be simplified, and power and space saving of the fuel cell system can be realized.

### Brief Description of Drawings

[Fig. 1] Fig. 1 is a block diagram schematically showing the configuration of a fuel cell system according to Embodiment 1.
[Fig. 2] Fig. 2 is a block diagram schematically showing the configuration of a fuel cell system according to Embodiment 2.
[Fig. 3] Fig. 3 is a block diagram schematically showing the configuration of a fuel cell system according to Variation 1.
[Fig. 4] Fig. 4 is a block diagram schematically showing the configuration of a fuel cell system according to Embodiment 3.
[Fig. 5] Fig. 5 is a block diagram schematically showing the configuration of a fuel cell system according to Embodiment 4.
[Fig. 6] Fig. 6 is a block diagram schematically showing the configuration of a fuel cell system according to Embodiment 5.

### Description of Embodiments

Hereinafter, specific exemplary embodiments of the present invention are described. In the drawings, the same or corresponding components are denoted by the same reference signs, and a repetition of the same description is avoided. In the drawings, only the components necessary for describing the present invention are shown, and the other components are omitted. Further, the present invention is not limited by the embodiments described below.

### (Embodiment 1)

A fuel cell system according to Embodiment 1 serves as an example where the fuel cell system includes: a fuel cell apparatus configured to generate electricity by using a fuel gas and an oxidizing gas, the fuel gas being generated through a reforming reaction between a raw material gas and condensation water; a heating medium circulation passage through which a heating medium circulates, the heating medium exchanging heat with at least one of off gases, the off gases being an off fuel gas which is the fuel gas discharged from the fuel cell apparatus and an off oxidizing gas which is the oxidizing gas discharged from the fuel cell apparatus; a first heat exchanger provided on the heating medium circulation passage and configured to produce the condensation water that is to be supplied to the fuel cell apparatus, the first heat exchanger producing the condensation water by condensing steam in the at least one off gas by performing heat exchange between the at least one off gas and the heating medium; a cooling mechanism provided on the heating medium circulation passage and configured to cool down the heating medium before the heating medium is supplied to the first heat exchanger; a first temperature detector configured to detect a temperature of the heating medium after the heating medium is cooled down by the cooling mechanism and before the heating medium is supplied to the first heat exchanger; and a controller configured to control the cooling mechanism such that the temperature detected by the first temperature detector becomes a first temperature which is set to such a temperature as to allow necessary condensation water for the reforming reaction to be produced by the first heat exchanger.

In the fuel cell system according to Embodiment 1, the cooling mechanism may include: a second heat exchanger configured to perform heat exchange between the heating medium and air before the heating medium is supplied to the first heat exchanger; and an air supply device configured to supply the air to the second heat exchanger, and the controller may control an amount of air supplied by the air supply device, such that the temperature detected by the first temperature detector becomes the first temperature.

The fuel cell system according to Embodiment 1 may further include: an air supply passage through which external air is supplied to the second heat exchanger when the air supply device operates; and an exhaust passage through which the at least one off gas is discharged to the atmosphere. The air supply passage and the exhaust passage may be configured to exchange heat with each other.

The fuel cell system according to Embodiment 1 may further include: a water recovery device configured to store the condensation water which is produced when the at least one off gas is cooled down; and a hydrogen generator configured to generate the fuel gas by causing the reforming reaction between the raw material gas and the condensation water that is supplied from the water recovery device.

The fuel cell system according to Embodiment 1 may further include a hot water tank configured to store hot storage water. The cooling mechanism may include a second heat exchanger configured to perform heat exchange between the heating medium and air before the heating medium is supplied to the first heat exchanger. The hot water tank may be configured such that the heating medium flowing through the heating medium circulation passage and the hot storage water exchange heat with each other at a portion of the heating medium circulation passage, the portion being upstream from the second heat exchanger and downstream from the first heat exchanger.

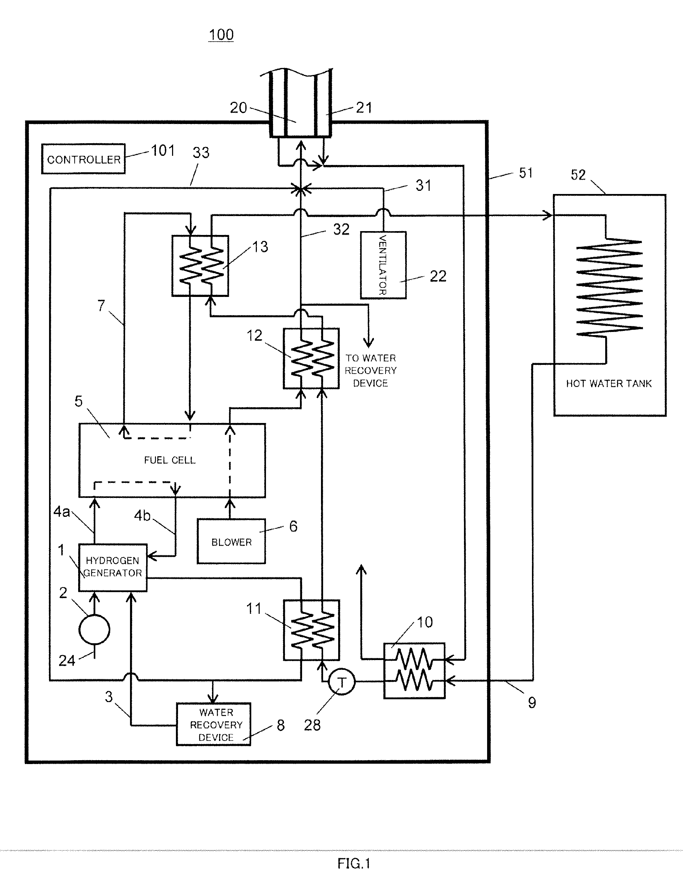

Hereinafter, an example of the fuel cell system according to Embodiment 1 is described with reference to Fig. 1.

### [Configuration of Fuel Cell System]

Fig. 1 is a block diagram schematically showing the configuration of the fuel cell system according to Embodiment 1.

As shown in Fig. 1, a fuel cell system 100 according to Embodiment 1 includes: a hydrogen generator 1; a fuel cell 5; a heating medium circulation passage 9; an exhaust gas heat exchanger 11; an exhaust air heat exchanger 12; and a second heat exchanger 10. It should be noted that, in Embodiment 1, at least one of the exhaust gas heat exchanger 11 and the exhaust air heat exchanger 12 serves as a first heat exchanger, and the hydrogen generator 1 and the fuel cell 5 form a fuel cell apparatus.

The fuel cell system 100 also includes a casing 51 which accommodates the component devices of the fuel cell system 100, such as the hydrogen generator 1. A wall of the casing 51 has a through-hole formed therein at a suitable position, the through-hole extending in the thickness direction of the wall. An exhaust passage 20 and an air supply passage 21 are connected to the hole. The exhaust passage 20 and the air supply passage 21 form a so-called double pipe. A ventilation passage 31, an exhaust air passage 32, and an exhaust gas passage 33 are connected to the exhaust passage 20. It should be noted that the air supply passage 21 is formed such that the downstream end of the air supply passage 21 is open at the inside of the casing.

A ventilator 22 is provided within the casing 51. The ventilator 22 is connected to the exhaust passage 20 via the ventilation passage 31. The ventilator 22 may be configured in any form, so long as the ventilator 22 is configured to ventilate the interior of the casing 51. For example, the ventilator 22 may be configured as a blower. Alternatively, the ventilator 22 may be configured as a fan. The ventilator 22 sends the internal gas of the casing 51 (mainly air) to the outside of the fuel cell system 100 through the ventilation passage 31 and the exhaust passage 20, thereby causing the external air to be sent into the casing 51 through the air supply passage 21. In this manner, the ventilator 22 functions as the air supply device of the cooling mechanism.

The hydrogen generator 1 includes a reformer and a combustor for heating the reformer (which are not shown). An off fuel gas passage 4b is connected to the combustor of the hydrogen generator 1. The combustor generates a flue gas by combusting a raw material gas supplied to the combustor through the off fuel gas passage 4b or by combusting a fuel gas unused in the fuel cell 5. The flue gas generated by the combustor of the hydrogen generator 1 heats up the reformer, and is then discharged to the exhaust gas passage 33. Thereafter, the flue gas is discharged to the outside of the fuel cell system 100 through the exhaust gas passage 33 and the exhaust passage 20.

A raw material gas passage 24 and a water supply passage 3 are connected to the reformer of the hydrogen generator 1. A raw material gas supply device 2 is provided on the raw material gas passage 24. The raw material gas supply device 2 is configured to supply a raw material gas to the reformer while adjusting the flow rate of the raw material gas. For example, a flow rate adjusting valve and a pump may form the raw material gas supply device 2. Alternatively, a flow rate adjustable pump may serve as the raw material gas supply device 2. It should be noted that examples of the raw material gas include natural gas and LP gas.

A water supply device (not shown) for supplying the reformer with condensation water stored in a water recovery device 8 is provided on the water supply passage 3. The water supply device may be configured in any form, so long as the water supply device is configured to supply condensation water to the reformer while adjusting the flow rate of the condensation water. For example, a flow rate adjusting valve and a pump may form the water supply device. Alternatively, a flow rate adjustable pump may serve as the water supply device.

The reformer of the hydrogen generator 1 is configured to generate a hydrogen-containing fuel gas by causing a reforming reaction between the raw material gas and the (condensation) water. The fuel gas generated by the reformer is supplied to the anode (not shown) of the fuel cell 5 via a fuel gas supply passage 4a.

The fuel cell 5 includes an anode and a cathode (not shown). It should be noted that various fuel cells, such as a polymer electrolyte fuel cell, a direct internal reforming solid oxide fuel cell, and an indirect internal reforming solid oxide fuel cell, can be used as the fuel cell 5.

Although in Embodiment 1 the hydrogen generator 1 and the fuel cell 5 are configured as separate components, the present embodiment is not thus limited. As an alternative, similar to a solid oxide fuel cell, the hydrogen generator 1 and the fuel cell 5 may be integrated. In such a case, the hydrogen generator 1 and the fuel cell 5 are configured as a single unit covered with a shared heat insulating material, and the combustor of the hydrogen generator 1 heats up not only the reformer but also the fuel cell 5. Further, in a case where the fuel cell 5 is configured as a direct internal reforming solid oxide fuel cell, the anode of the fuel cell 5 and the reformer of the hydrogen generator 1 may be integrated since the anode of the fuel cell 5 has a reformer function. Since the configuration of the fuel cell 5 is the same as that of a general fuel cell, a detailed description of the configuration of the fuel cell 5 is omitted.

An oxidizing gas (air) is supplied from a blower 6 to the cathode of the fuel cell 5. The fuel gas supplied to the anode and the oxidizing gas supplied to the cathode react with each other. As a result, water is produced, and electricity and heat are generated. The fuel gas that has not been used in the fuel cell 5 is supplied to the combustor of the hydrogen generator 1 as an off fuel gas through the off fuel gas passage 4b. The oxidizing gas that has not been used in the fuel cell 5 is discharged to the outside of the fuel cell system 100 as an off oxidizing gas through the exhaust air passage 32 and the exhaust passage 20.

It should be note that the generated electricity is supplied to an external electrical load (e.g., a household electrical appliance) by a power conditioner which is not shown. Also, the generated heat is recovered by cooling water flowing through a cooling water passage 7.

In Embodiment 1, a part of the heating medium circulation passage 9 is positioned outside of the casing 51. The second heat exchanger 10, the exhaust gas heat exchanger 11, the exhaust air heat exchanger 12, and a cooling water heat exchanger 13 are sequentially arranged on the heating medium circulation passage 9 in said order.

A first temperature detector 28 is provided on the heating medium circulation passage 9. To be specific, on the heating medium circulation passage 9, the first temperature detector 28 is provided downstream from the second heat exchanger 10 included in the cooling mechanism and upstream from the exhaust gas heat exchanger 11. The first temperature detector 28 is configured to output, to a controller 101, a detected temperature of a heating medium.

The heating medium flows through the inside of the heating medium circulation passage 9, exchanging heat with another heating medium at each heat exchanger. It should be noted that, for example, water or an antifreezing fluid (e.g., an ethylene glycol-containing solution) can be used as the heating medium.

The second heat exchanger 10 is provided in a manner to span between the heating medium circulation passage 9 and the air supply passage 21, and is configured to perform heat exchange between the heating medium flowing through the heating medium circulation passage 9 and the external air flowing through the air supply passage 21. The second heat exchanger 10 may be configured in any manner, so long as the second heat exchanger 10 is configured to allow the air to cool down the heating medium that has passed through the inside of a hot water tank 52. The second heat exchanger 10 may be configured as a general heat exchanger. Alternatively, for example, a radiation fin may be formed on the piping forming the heating medium circulation passage 9, and the radiation fin may serve as the second heat exchanger 10.

The exhaust gas heat exchanger 11 is provided in a manner to span between the heating medium circulation passage 9 and the exhaust gas passage 33, and is configured to perform heat exchange between the heating medium flowing through the heating medium circulation passage 9 and the flue gas flowing through the exhaust gas passage 33. It should be noted that steam in the flue gas exchanges heat with the heating medium at the exhaust gas heat exchanger 11, and is thereby condensed. As a result, condensation water is produced. The produced condensation water is recovered by the water recovery device 8. In the description herein, fuel gases discharged from the fuel cell apparatus are collectively referred to as an "off fuel gas". Therefore, the flue gas is one form of the off fuel gas.

The exhaust air heat exchanger 12 is provided in a manner to span between the heating medium circulation passage 9 and the exhaust air passage 32, and is configured to perform heat exchange between the heating medium flowing though the heating medium circulation passage 9 and the off oxidizing gas flowing through the exhaust air passage 32. It should be noted that steam in the off oxidizing gas exchanges heat with the heating medium at the exhaust air heat exchanger 12, and is thereby condensed. As a result, condensation water is produced. The produced condensation water is recovered by the water recovery device 8.

The cooling water heat exchanger 13 is provided in a manner to span between the heating medium circulation passage 9 and the cooling water passage 7, and is configured to perform heat exchange between the heating medium flowing through the heating medium circulation passage 9 and the cooling water flowing through the cooling water passage 7.

The hot water tank 52 is provided outside of the casing 51. As shown in Fig. 1, on the heating medium circulation passage 9, the hot water tank 52 is provided upstream from the second heat exchanger 10 and downstream from the exhaust air heat exchanger (first heat exchanger) 12. Piping forming a part of the heating medium circulation passage 9 is disposed within the hot water tank 52. Accordingly, the hot water tank 52 can perform heat exchange between the heating medium flowing through the piping forming the part of the heating medium circulation passage 9 and hot storage water stored in the hot water tank 52.

The controller 101 may be configured as any device, so long as the device is configured to control each component device of the fuel cell system 100. The controller 101 includes: an arithmetic processing unit exemplified by, for example, a microprocessor or a CPU; and a storage unit configured as a memory or the like storing programs for performing control operations. Through loading and execution, by the arithmetic processing unit, of a predetermined control program stored in the storage unit, the controller 101 performs various controls of the fuel cell system 100.

It should be noted that the controller 101 may be configured not only as a single controller, but as a group of multiple controllers which operate in cooperation with each other to control the fuel cell system 100. Moreover, the controller 101 may be configured as a microcomputer. Furthermore, the controller 101 may be configured as an MPU, PLC (Programmable Logic Controller), logic circuit, or the like.

### [Operations of Fuel Cell System]

Next, operations of the fuel cell system 100 according to Embodiment 1 are described. It should be noted that since a power generation operation of the fuel cell system 100 is performed in the same manner as a power generation operation of a general fuel cell system, a detailed description of the power generation operation is omitted.

First, the controller 101 obtains, from the first temperature detector 28, the temperature of the heating medium detected by the first temperature detector 28. Next, if the obtained temperature is higher than a first temperature, the controller 101 increases the operating amount of the ventilator 22, thereby increasing the flow rate of air flowing through the air supply passage 21. Then, the controller 101 controls the ventilator 22 such that the temperature detected by the first temperature detector 28 becomes the first temperature. It should be noted that the wording, "increases the operating amount of the ventilator 22", includes starting the ventilator 22.

The first temperature herein is such a temperature as to allow the off gas to be condensed into steam at the first heat exchanger (here, the exhaust gas heat exchanger 11). The first temperature is suitably set in accordance with the dew point of the off gas. The first temperature may be set to 40 °C to 50 °C, for example.

As a result, heat exchange at the second heat exchanger 10 is facilitated and the temperature of the heating medium supplied to the exhaust gas heat exchanger 11 can be adjusted to the first temperature so that the steam in the off gas can be readily condensed.

As described above, in the fuel cell system 100 according to Embodiment 1, the heating medium is cooled down through heat exchange with air, and thereby the performance of the exhaust gas heat exchanger 11 and the exhaust air heat exchanger 12 in terms of recovering water from the off gases (the flue gas and the off oxidizing gas) can be improved. As a result, efficient operation of the fuel cell system 100 can be realized.

Further, in the fuel cell system 100 according to Embodiment 1, the second heat exchanger 10 is the only major additional component compared to conventional art. Therefore, as compared to the fuel cell system disclosed in Patent Literature 2, the configuration of the fuel cell system 100 can be simplified, and power and space saving of the fuel cell system 100 can be realized.

Although the fuel cell system 100 according to Embodiment 1 is configured such that the hydrogen-containing gas is sent out of the reformer of the hydrogen generator 1 to the fuel cell 5 as a fuel gas, the present embodiment is not thus limited. For example, the fuel cell system 100 may be configured such that the hydrogen-containing gas that has passed through a shift converter and/or a carbon monoxide remover is sent to the fuel cell 5. The shift converter includes a shift conversion catalyst (e.g., a copper-zinc based catalyst) for reducing carbon monoxide in the hydrogen-containing gas sent out of the reformer. The carbon monoxide remover includes an oxidation catalyst (e.g., a ruthenium-based catalyst) or a methanation catalyst (e.g., a ruthenium-based catalyst) for reducing carbon monoxide in the hydrogen-containing gas sent out of the reformer.

Further, in the fuel cell system 100 according to Embodiment 1, the second heat exchanger 10 may be disposed outside of the casing 51 and may be configured to perform heat exchange between the heating medium and the air outside of the casing 51.

### (Embodiment 2)

A fuel cell system according to Embodiment 2 serves as an example where the cooling mechanism further includes a first flow dividing device configured to vary a proportion of an amount of air supplied to a first air passage to an amount of air supplied to a second air passage, the first air passage being configured to supply air to the second heat exchanger, the second air passage being configured to supply no air to the second heat exchanger, and the controller controls the first flow dividing device such that the temperature detected by the first temperature detector becomes the first temperature.

### [Configuration of Fuel Cell System]

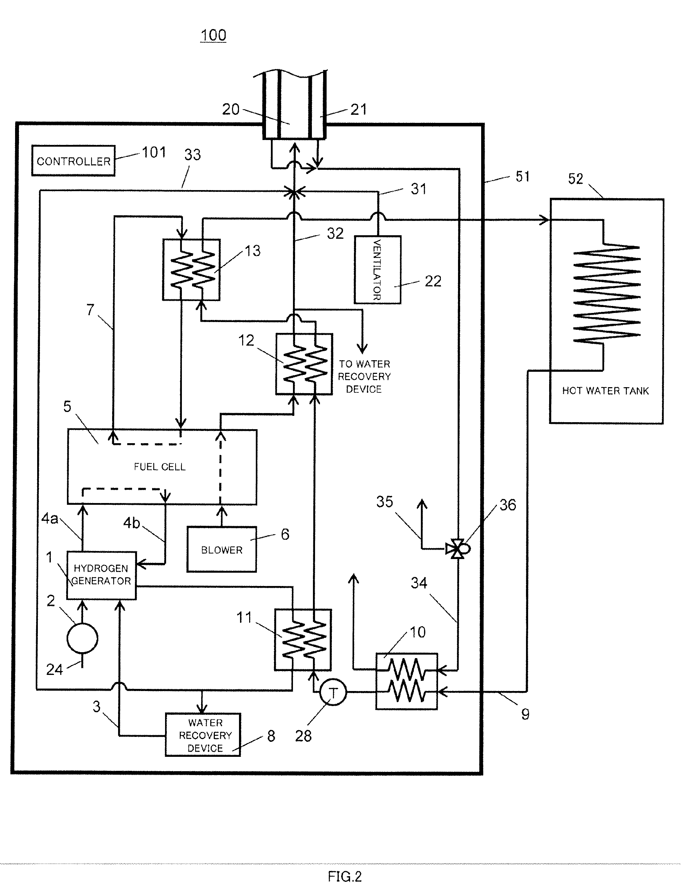

Fig. 2 is a block diagram schematically showing the configuration of the fuel cell system according to Embodiment 2.

As shown in Fig. 2, the fundamental configuration of the fuel cell system 100 according to Embodiment 2 is the same as that of the fuel cell system 100 according to Embodiment 1. However, the fuel cell system 100 according to Embodiment 2 is different from the fuel cell system 100 according to Embodiment 1, in that a first flow dividing device 36 is provided on the air supply passage 21. Specifically, the first flow dividing device 36 is provided on the air supply passage 21 at a position upstream from the second heat exchanger 10. The air supply passage 21 is divided by the first flow dividing device 36 into a first air passage 34 and a second air passage 35. The first air passage 34 extends through the second heat exchanger 10, and allows external air to be supplied into the casing 51. The second air passage 35 also allows external air to be supplied into the casing 51, but does not extend through the second heat exchanger 10. Accordingly, external air supplied from the outside of the casing 51 is divided into the external air that flows through the first air passage 34 and the external air that flows through the second air passage 35.

The controller 101 controls the first flow dividing device 36 to vary the proportion of the external air sent to the first air passage 34 to the external air sent to the second air passage 35. That is, the control by the controller 101 allows the first flow dividing device 36 to function as a flow divider which varies the proportion of the air flowing from the air supply passage 21 into the first air passage 34 to the air flowing from the air supply passage 21 into the second air passage 35. In this manner, the amount of external air sent to the second heat exchanger 10 can be increased/decreased, which makes it possible to adjust a degree to which the heating medium is cooled down at the second heat exchanger 10.

Although in Embodiment 2 the first flow dividing device 36 is a flow divider, the present embodiment is not thus limited. Alternatively, the first flow dividing device 36 may be a passage-switching device which switches the destination of the flowing air between the first air passage 34 and the second air passage 35. The passage-switching device may be configured as a three-way valve, for example. Alternatively, a first on-off valve may be provided on the first air passage 34 or the air supply passage 21, and a second on-off valve may be provided on the second air passage. The destination of the flowing air may be switched by means of these on-off valves.

### [Operations of Fuel Cell System]

Next, operations of the fuel cell system 100 according to Embodiment 2 are described.

First, the controller 101 obtains, from the first temperature detector 28, the temperature of the heating medium detected by the first temperature detector 28. Next, if the obtained temperature is higher than the first temperature, the controller 101 controls the first flow dividing device 36 to increase the amount of air sent to the second heat exchanger 10 (in such a manner as to increase the flow rate of air flowing through the first air passage 34). Then, the controller 101 controls the first flow dividing device 36 such that the temperature detected by the first temperature detector 28 becomes the first temperature.

As a result, heat exchange at the second heat exchanger 10 is facilitated and the temperature of the heating medium supplied to the exhaust gas heat exchanger 11 can be adjusted to the first temperature so that the steam in the off gas can be readily condensed.

The fuel cell system 100 according to Embodiment 2 with the above-described configuration provides the same operational advantages as those provided by the fuel cell system 100 according to Embodiment 1. It should be noted that when the temperature of the heating medium is higher than the first temperature, the controller 101 may control the first flow dividing device 36 to increase the amount of air sent to the second heat exchanger 10 (in such a manner as to increase the flow rate of air flowing through the first air passage 34), and also may increase the operating amount of the ventilator 22.

### [Variation 1]

Next, a fuel cell system according to a variation of Embodiment 2 is described.

A fuel cell system according to Variation 1 of Embodiment 2 serves as an example where the fuel cell system further includes a second temperature detector configured to detect a temperature of external air. In the fuel cell system according to Variation 1, the air supply device is configured to supply the external air to the second heat exchanger, and the controller causes the cooling mechanism to operate if the temperature detected by the second temperature detector is lower than a predetermined second temperature.

### [Configuration of Fuel Cell System]

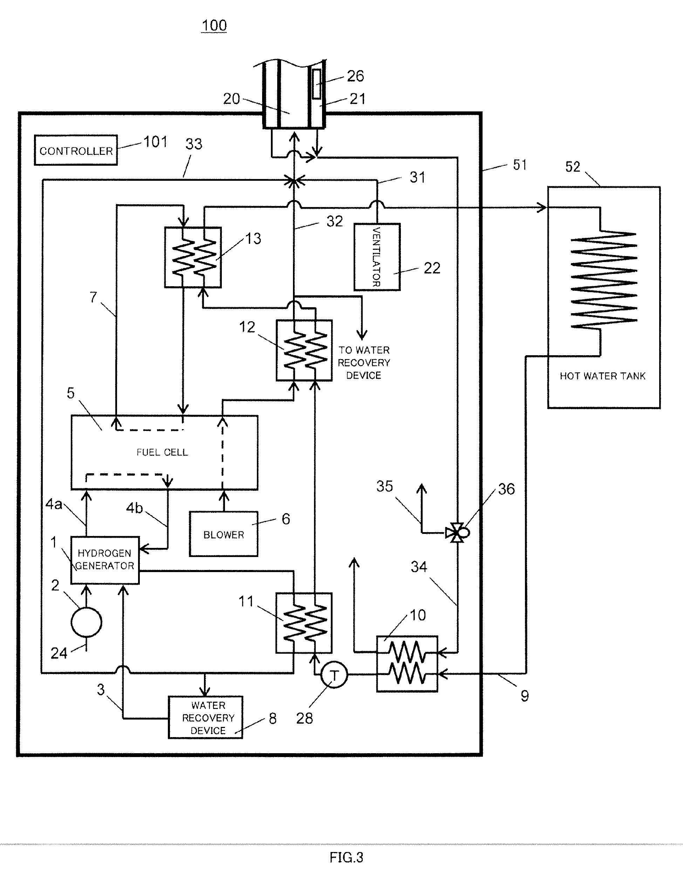

Fig. 3 is a block diagram schematically showing the configuration of the fuel cell system according to Variation 1.

As shown in Fig. 3, the fundamental configuration of the fuel cell system 100 according to Variation 1 is the same as that of the fuel cell system 100 according to Embodiment 2. However, the fuel cell system 100 according to Variation 1 is different from the fuel cell system 100 according to Embodiment 2, in that a second temperature detector 26 is provided at the air supply passage 21 of the fuel cell system 100 according to Variation 1. The second temperature detector 26 is configured to detect the temperature of air flowing through the air supply passage 21, and to output the detected temperature to the controller 101. Examples of the second temperature detector 26 include a thermocouple and a thermistor.

### [Operations of Fuel Cell System]

Next, the operations of the fuel cell system 100 according to Variation 1 are described.

First, the controller 101 obtains, from the second temperature detector 26, the temperature of external air detected by the second temperature detector 26. Next, if the obtained temperature is lower than a second temperature, the controller 101 causes the ventilator 22 and/or the first flow dividing device 36 to operate to send air to the second heat exchanger 10. Then, the controller 101 controls the ventilator 22 and/or the first flow dividing device 36 such that the temperature detected by the first temperature detector 28 becomes the first temperature.

The second temperature herein is such a temperature as to allow the heating medium to be cooled down at the second heat exchanger 10, and to allow the cooled heating medium to condense the steam in the off gas (or off gases) at the first heat exchanger (the exhaust gas heat exchanger 11 and/or the exhaust air heat exchanger 12). The second temperature is suitably set in accordance with the dew point of the off gas (or off gases) and the temperature of the heating medium that has passed through the inside of the hot water tank 52. The second temperature may be set through an experiment, for example. The second temperature may be 40 °C to 50 °C, for example.

As a result, heat exchange is sufficiently performed at the second heat exchanger 10, and the temperature of the heating medium to be supplied to the exhaust gas heat exchanger 11 can be adjusted to the first temperature, which makes it possible to readily condense the steam in the off gas (or off gases).

On the other hand, if the temperature detected by the second temperature detector 26 is higher than or equal to the second temperature, the controller 101 causes the first flow dividing device 36 to operate such that the external air is supplied to the second air passage 35 but not to the first air passage 34. In this state, the controller 101 causes the ventilator 22 to operate. Through this control, the interior of the casing 51 can be ventilated assuredly, and an increase in the temperature of the heating medium at the exhaust gas heat exchanger 11 due to the external air can be suppressed.

The fuel cell system 100 according to Variation 1 with the above-described configuration provides the same operational advantages as those provided by the fuel cell system 100 according to Embodiment 2.

### (Embodiment 3)

A fuel cell system according to Embodiment 3 serves as an example where the fuel cell system further includes: a bypass passage connected to the heating medium circulation passage and formed in a manner to bypass the cooling mechanism; and a second flow dividing device provided on the heating medium circulation passage and configured to divide a flow of the heating medium into a flow directed to the heating medium circulation passage and a flow directed to the bypass passage. In the fuel cell system according to Embodiment 3, the controller controls the second flow dividing device such that the temperature detected by the first temperature detector becomes the first temperature.

In the fuel cell system according to Embodiment 3, the cooling mechanism may include a second heat exchanger configured to perform heat exchange between the heating medium and air before the heating medium is supplied to the first heat exchanger. The fuel cell system according to Embodiment 3 may further include a third temperature detector configured to detect a temperature of the heating medium before the heating medium is supplied to the second heat exchanger, and if the temperature detected by the third temperature detector is lower than or equal to a predetermined third temperature, the controller may control the second flow dividing device such that the heating medium flows only through the bypass passage.

### [Configuration of Fuel Cell System]

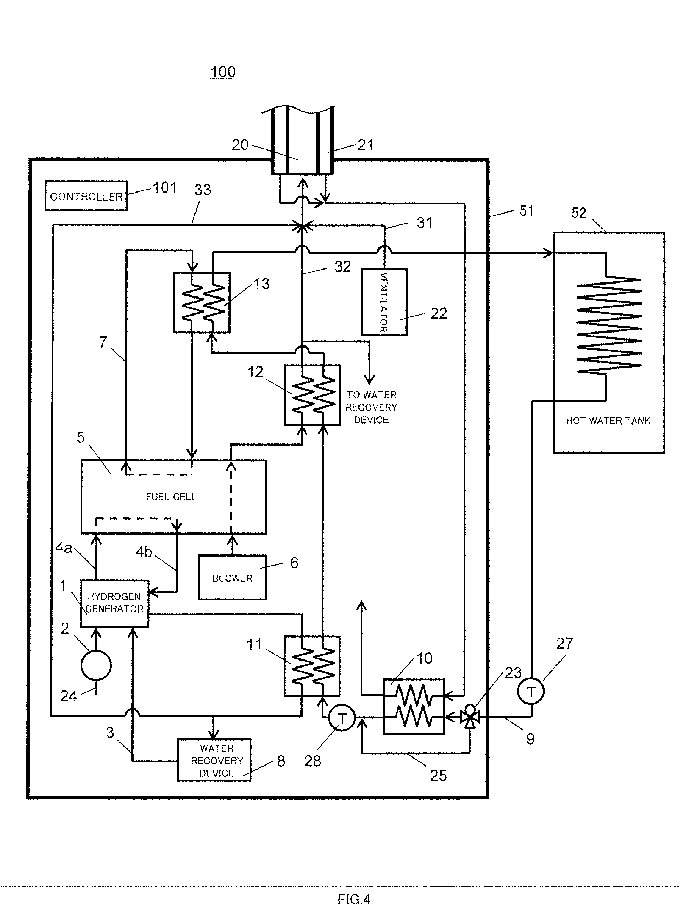

Fig. 4 is a block diagram schematically showing the configuration of the fuel cell system according to Embodiment 3.

As shown in Fig. 4, the fundamental configuration of the fuel cell system 100 according to Embodiment 3 is the same as that of the fuel cell system 100 according to Embodiment 1. However, the fuel cell system 100 according to Embodiment 3 is different from the fuel cell system 100 according to Embodiment 1, in that a third temperature detector 27, a second flow dividing device 23, and a bypass passage 25 are provided on the heating medium circulation passage 9 of the fuel cell system 100 according to Embodiment 3.

Specifically, the bypass passage 25, which is formed in a manner to bypass the second heat exchanger 10, is connected to the heating medium circulation passage 9. The bypass passage 25 is formed so as to connect a portion of the heating medium circulation passage 9, the portion being upstream from the second heat exchanger 10, to a portion of the heating medium circulation passage 9, the portion being downstream from the second heat exchanger 10.

The second flow dividing device 23 is provided at a position where the upstream end of the bypass passage 25 and the heating medium circulation passage 9 are connected. Control by the controller 101 allows the second flow dividing device 23 to function as a flow divider which varies the proportion of the heating medium flowing from the inside of the heating medium circulation passage 9 into the second heat exchanger 10 to the heating medium flowing from the inside of the heating medium circulation passage 9 into the bypass passage 25.

Although in Embodiment 3 the second flow dividing device 23 is a flow divider, the present embodiment is not thus limited. Alternatively, the second flow dividing device 23 may be a passage-switching device which switches the destination of the flowing heating medium between the second heat exchanger 10 and the bypass passage 25. The passage-switching device may be configured as a three-way valve, for example. Alternatively, on the heating medium circulation passage 9, a first on-off valve may be provided between the second heat exchanger 10 and the position where the upstream end of the bypass passage 25 is connected to the heating medium circulation passage 9, and a second on-off valve may be provided on the bypass passage 25. The destination of the flowing heating medium may be switched by means of these on-off valves.

Further, the third temperature detector 27 for detecting the temperature of the heating medium supplied to the second heat exchanger 10 is provided on the heating medium circulation passage 9. The third temperature detector 27 is configured to output the detected temperature of the heating medium to the controller 101. From the standpoint of precise detection of the temperature of the heating medium supplied to the second heat exchanger 10, it is more preferred that, on the heating medium circulation passage 9, the third temperature detector 27 is provided downstream from the hot water tank 52 and upstream from and near the position where the upstream end of the bypass passage 25 is connected to the heating medium circulation passage 9.

### [Operations of Fuel Cell System]

Next, the operations of the fuel cell system 100 according to Embodiment 3 are described.

First, the controller 101 obtains, from the third temperature detector 27, the temperature of the heating medium detected by the third temperature detector 27. Next, if the temperature obtained from the third temperature detector 27 is higher than a third temperature, the controller 101 controls the second flow dividing device 23 to cause the heating medium flowing through the heating medium circulation passage 9 to flow into the second heat exchanger 10, and increases the operating amount of the ventilator 22.

On the other hand, if the temperature obtained from the third temperature detector 27 is lower than or equal to the third temperature, the controller 101 controls the second flow dividing device 23 to cause the heating medium flowing through the heating medium circulation passage 9 to flow into the bypass passage 25. Through this control, the heating medium can be prevented from being cooled down more than necessary, which makes it possible to reduce the amount of heat taken by air (external air) and thereby to improve the energy supply efficiency of the fuel cell system 100.

The third temperature herein is such a temperature as to allow the steam in the off gas (or off gases) to be condensed at the first heat exchanger (the exhaust gas heat exchanger 11 and/or the exhaust air heat exchanger 12) even without cooling down the heating medium at the second heat exchanger 10. The third temperature is suitably set in accordance with the dew point of the off gas (or off gases). The third temperature can be set through an experiment, for example. The third temperature may be 40 °C to 50 °C, for example.

The controller 101 controls the ventilator 22 and/or the second flow dividing device 23 such that the temperature detected by the first temperature detector 28 becomes the first temperature.

The fuel cell system 100 according to Embodiment 3 with the above-described configuration provides the same operational advantages as those provided by the fuel cell system 100 according to Embodiment 1.

### (Embodiment 4)

A fuel cell system according to Embodiment 4 serves as an example where the fuel cell system is configured to perform heat exchange between a steam-containing off gas discharged from the fuel cell apparatus and the raw material gas supplied to the fuel cell apparatus. That is, the raw material gas is used as a heat-exchange gas.

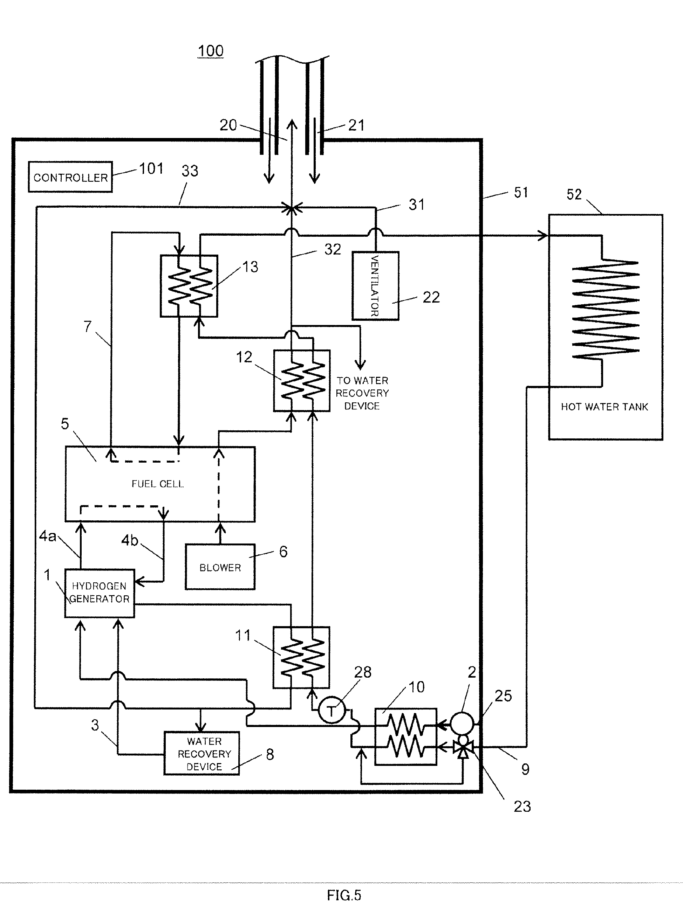

Fig. 5 is a block diagram schematically showing the configuration of the fuel cell system according to Embodiment 4.

As shown in Fig. 5, the fundamental configuration of the fuel cell system 100 according to Embodiment 4 is the same as that of the fuel cell system 100 according to Embodiment 1. However, the fuel cell system 100 according to Embodiment 4 is different from the fuel cell system 100 according to Embodiment 1, in that the second heat exchanger 10 of the fuel cell system 100 according to Embodiment 4 is configured to perform heat exchange between the raw material gas and the heating medium flowing through the heating medium circulation passage 9.

The fuel cell system 100 according to Embodiment 4 with the above-described configuration provides the same operational advantages as those provided by the fuel cell system 100 according to Embodiment 1.

### (Embodiment 5)

A fuel cell system according to Embodiment 5 serves as an example where the fuel cell system further includes a heating medium tank configured to store the heating medium.

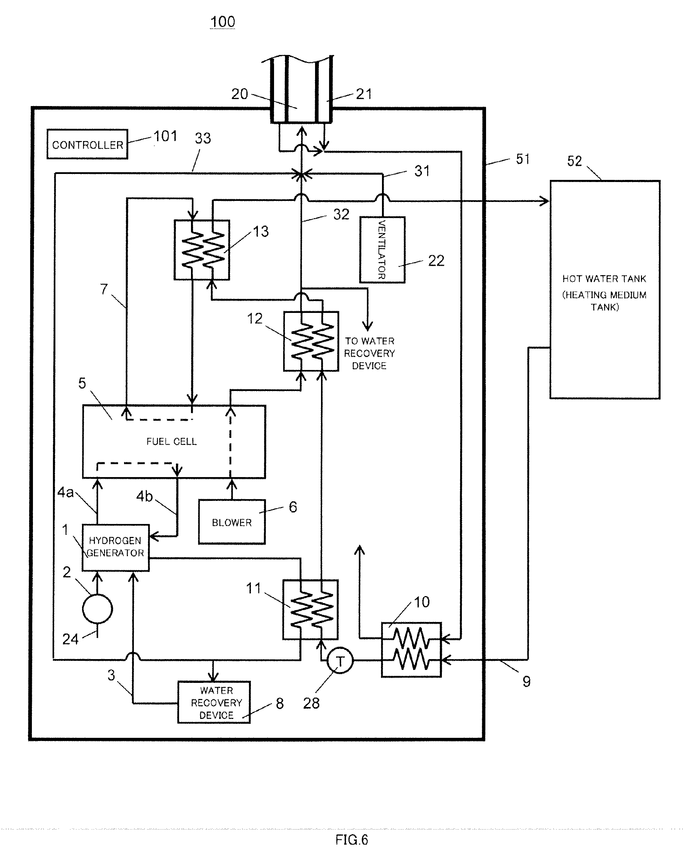

Fig. 6 is a block diagram schematically showing the configuration of the fuel cell system according to Embodiment 5.

As shown in Fig. 6, the fundamental configuration of the fuel cell system 100 according to Embodiment 5 is the same as that of the fuel cell system 100 according to Embodiment 1. However, the fuel cell system 100 according to Embodiment 5 is different from the fuel cell system 100 according to Embodiment 1, in that in the fuel cell system 100 according to Embodiment 5, the hot water tank 52 is provided on the heating medium circulation passage 9. To be specific, on the heating medium circulation passage 9, the hot water tank 52 is provided upstream from the second heat exchanger 10 (to be more specific, provided downstream from the cooling water heat exchanger 13 and upstream from the second heat exchanger 10).

Further, the fuel cell system 100 according to Embodiment 5 is configured such that the heating medium is supplied into and discharged from the hot water tank 52, and a thermal stratification of the heating medium is formed within the hot water tank 52. It should be noted that hot storage water is used as the heating medium in Embodiment 5.

The fuel cell system 100 according to Embodiment 5 with the above-described configuration provides the same operational advantages as those provided by the fuel cell system 100 according to Embodiment 1.

From the foregoing description, numerous modifications and other embodiments of the present invention are obvious to one skilled in the art. Therefore, the foregoing description should be interpreted only as an example and is provided for the purpose of teaching the best mode for carrying out the present invention to one skilled in the art. The structural and/or functional details may be substantially altered without departing from the spirit of the present invention. In addition, various inventions can be made by suitable combinations of a plurality of components disclosed in the above embodiments.

### Industrial Applicability

The fuel cell system and the method of operating the same according to the present invention are useful in the field of fuel cell technology since they realize improved water recovery performance in recovering water from the off gas even when the temperature of the heating medium is high.

### Reference Signs List

- 1: hydrogen generator
- 2: raw material gas supply device
- 3: water supply passage
- 4a: fuel gas supply passage
- 4b: off fuel gas passage
- 5: fuel cell
- 6: blower
- 7: cooling water passage
- 8: water recovery device
- 9: heating medium circulation passage
- 10: second heat exchanger
- 11: exhaust gas heat exchanger
- 12: exhaust air heat exchanger
- 13: cooling water heat exchanger
- 20: exhaust passage
- 21: air supply passage
- 22: ventilator
- 23: second flow dividing device
- 24: raw material gas passage
- 25: bypass passage
- 26: second temperature detector
- 27: third temperature detector
- 28: first temperature detector
- 31: ventilation passage
- 32: exhaust air passage
- 33: exhaust gas passage
- 34: first air passage
- 35: second air passage
- 36: first flow dividing device
- 51: casing
- 52: hot water tank
- 100: fuel cell system
- 101: controller

## Claims

1. A fuel cell system comprising:
a fuel cell apparatus configured to generate electricity by using a fuel gas and an oxidizing gas, the fuel gas being generated through a reforming reaction between a raw material gas and condensation water;
a heating medium circulation passage through which a heating medium circulates, the heating medium exchanging heat with at least one of off gases, the off gases being an off fuel gas which is the fuel gas discharged from the fuel cell apparatus and an off oxidizing gas which is the oxidizing gas discharged from the fuel cell apparatus;
a first heat exchanger provided on the heating medium circulation passage and configured to produce the condensation water that is to be supplied to the fuel cell apparatus, the first heat exchanger producing the condensation water by condensing steam in the at least one off gas by performing heat exchange between the at least one off gas and the heating medium;
a cooling mechanism provided on the heating medium circulation passage and configured to cool down the heating medium before the heating medium is supplied to the first heat exchanger;
a first temperature detector configured to detect a temperature of the heating medium after the heating medium is cooled down by the cooling mechanism and before the heating medium is supplied to the first heat exchanger; and
a controller configured to control the cooling mechanism such that the temperature detected by the first temperature detector becomes a first temperature which is set to such a temperature as to allow necessary condensation water for the reforming reaction to be produced by the first heat exchanger.

2. The fuel cell system according to claim 1, wherein
the cooling mechanism includes:
a second heat exchanger configured to perform heat exchange between the heating medium and air before the heating medium is supplied to the first heat exchanger; and
an air supply device configured to supply the air to the second heat exchanger, and
the controller controls an amount of air supplied by the air supply device, such that the temperature detected by the first temperature detector becomes the first temperature.

3. The fuel cell system according to claim 2, wherein
the cooling mechanism further includes a first flow dividing device configured to vary a proportion of an amount of air supplied to a first air passage to an amount of air supplied to a second air passage, the first air passage being configured to supply air to the second heat exchanger, the second air passage being configured to supply no air to the second heat exchanger, and
the controller controls the first flow dividing device such that the temperature detected by the first temperature detector becomes the first temperature.

4. The fuel cell system according to claim 2 or claim 3, further comprising a second temperature detector configured to detect a temperature of external air, wherein
the air supply device is configured to supply the external air to the second heat exchanger, and
the controller causes the cooling mechanism to operate if the temperature detected by the second temperature detector is lower than a predetermined second temperature.

5. The fuel cell system according to any one of claims 1 to 4, further comprising:
a bypass passage connected to the heating medium circulation passage and formed in a manner to bypass the cooling mechanism; and
a second flow dividing device provided on the heating medium circulation passage and configured to divide a flow of the heating medium into a flow directed to the heating medium circulation passage and a flow directed to the bypass passage, wherein
the controller controls the second flow dividing device such that the temperature detected by the first temperature detector becomes the first temperature.

6. The fuel cell system according to claim 5, wherein
the cooling mechanism includes a second heat exchanger configured to perform heat exchange between the heating medium and air before the heating medium is supplied to the first heat exchanger,
the fuel cell system further comprising a third temperature detector configured to detect a temperature of the heating medium before the heating medium is supplied to the second heat exchanger, wherein
if the temperature detected by the third temperature detector is lower than or equal to a predetermined third temperature, the controller controls the second flow dividing device such that the heating medium flows only through the bypass passage.

7. The fuel cell system according to any one of claims 2 to 4 and 6, further comprising:
an air supply passage through which external air is supplied to the second heat exchanger when the air supply device operates; and
an exhaust passage through which the at least one off gas is discharged to the atmosphere, wherein
the air supply passage and the exhaust passage are configured to exchange heat with each other.

8. The fuel cell system according to any one of claims 1 to 7, further comprising:
a water recovery device configured to store the condensation water which is produced when the at least one off gas is cooled down; and
a hydrogen generator configured to generate the fuel gas by causing the reforming reaction between the raw material gas and the condensation water that is supplied from the water recovery device.

9. The fuel cell system according to any one of claims 1 to 8, further comprising a hot water tank configured to store hot storage water, wherein
the cooling mechanism includes a second heat exchanger configured to perform heat exchange between the heating medium and air before the heating medium is supplied to the first heat exchanger, and
the hot water tank is configured such that the heating medium flowing through the heating medium circulation passage and the hot storage water exchange heat with each other at a portion of the heating medium circulation passage, the portion being upstream from the second heat exchanger and downstream from the first heat exchanger.

10. The fuel cell system according to any one of claims 1 to 8, further comprising a heating medium tank configured to store the heating medium.

11. A method of operating a fuel cell system including a fuel cell apparatus configured to generate electricity by using a fuel gas and an oxidizing gas, the fuel gas being generated through a reforming reaction between a raw material gas and condensation water,
the fuel cell system including:
a heating medium circulation passage through which a heating medium circulates, the heating medium exchanging heat with at least one of off gases, the off gases being an off fuel gas which is the fuel gas discharged from the fuel cell apparatus and an off oxidizing gas which is the oxidizing gas discharged from the fuel cell apparatus;
a first heat exchanger provided on the heating medium circulation passage and configured to produce the condensation water that is to be supplied to the fuel cell apparatus, the first heat exchanger producing the condensation water by condensing steam in the at least one off gas by performing heat exchange between the at least one off gas and the heating medium;
a cooling mechanism provided on the heating medium circulation passage and configured to cool down the heating medium before the heating medium is supplied to the first heat exchanger; and
a first temperature detector configured to detect a temperature of the heating medium after the heating medium is cooled down by the cooling mechanism and before the heating medium is supplied to the first heat exchanger,
the method comprising operating the cooling mechanism such that the temperature detected by the first temperature detector becomes a first temperature which is set to such a temperature as to allow necessary condensation water for the reforming reaction to be produced by the first heat exchanger.
